# EUROPÄISCHE PATENTANMELDUNG

(11) **EP 2 792 395 A1**
(43) Veröffentlichungstag der Anmeldung: **22.10.2014**
(21) Anmeldenummer: 13163935.3
(22) Anmeldetag: 16.04.2013
(51) Int. Cl.: B01D 25/02

(54) **Filterschicht, Filtermodul sowie Filtervorrichtung**

(71) Anmelder: Filtrox AG, 9000 St. Gallen (CH)
(72) Erfinder: Loser, Werner, 9242 Oberuzwil (CH)
(74) Vertreter: Hepp Wenger Ryffel AG

(57) **Zusammenfassung**

Filterschicht (1) für ein Filtermodul (5), wobei die Filterschicht (1) mehrere voneinander beabstandete Öffnungen aufweist, wobei die Öffnungen die Filterschicht (1) quer durchdringen. Die Öffnungen dienen als Filtratablauf (2) und als Unfiltratzulauf (3). Dabei sind die Öffnungen derart angeordnet, dass jeder Filtratablauf (2) von jeweils sechs Unfiltratzuläufen (3) benachbart ist.

## Beschreibung

Die vorliegende Erfindung liegt auf dem Gebiet der Filtrationstechnik. Sie betrifft insbesondere eine Filterschicht, ein Filtermodul sowie eine Filtervorrichtung gemäss den Oberbegriffen der unabhängigen Ansprüche.

In den meisten Anwendungen werden Filter derart aufgebaut, dass eine Filterschicht von einem zu filtrierenden Medium quer zu ihrer flächigen Ausdehnung durchströmt wird. Dabei werden Verunreinigungen in der Filterschicht oder aber im Falle einer Anschwemmfiltration im Anschwemmfilterkuchen zurückgehalten. Daneben ist auch die laterale Filtration bekannt. Dabei wird die Filterschicht in Richtung ihrer flächigen Ausdehnung durchströmt.

So zeigt beispielsweise US 2,521,060 eine Filtervorrichtung, wo mehrere Filterschichten aufeinandergestapelt sind. Die Filterschichten weisen durchgehende Bohrungen auf. Das zu filtrierende Medium durchströmt die Filterschicht von einer ersten als Unfiltratzulauf dienenden Bohrung zu einer benachbarten zweiten als Filtratablauf dienenden Bohrung. Nachteilig bei einer solchen Anordnung ist, dass die aktive Filterfläche sehr begrenzt ist und die Unfiltratzuläufe zu Verstopfung neigen.

Es ist Aufgabe der Erfindung, die Nachteile des Standes der Technik zu überwinden. Insbesondere soll eine Filterschicht, ein Filtermodul sowie eine Filtervorrichtung zur Verfügung gestellt werden, welche für die laterale Filtration eine vergrösserte aktive Filteroberfläche aufweist.

Diese Aufgabe wird durch die in den unabhängigen Patentansprüchen definierten Vorrichtungen gelöst. Weitere Ausführungsformen ergeben sich aus den abhängigen Patentansprüchen.

Eine erfindungsgemässe Filterschicht für die laterale Filtration weist mehrere voneinander beabstandete Öffnungen auf, welche die Filterschicht quer durchdringen. Die Öffnungen dienen als Filtratablauf und als Unfiltratzulauf. Beispielsweise sind die Öffnungen für den Filtratablauf allesamt gleich gross ausgestaltet und auch die Öffnungen für den Unfiltratzulauf können jeweils dieselbe Grösse aufweisen. Die Öffnungen sind derart angeordnet, dass jeder Filtratablauf von jeweils sechs Unfiltratzuläufen direkt benachbart ist. Eine solche Anordnung ermöglicht eine möglichst gleichmässige Ausnutzung des Filtermediums der Filterschicht. Jeder Filtratablauf kann aus allen Richtungen ein durch die Filterschicht strömendes filtriertes Medium aufnehmen.

Jeder Unfiltratzulauf kann von jeweils drei Filtratabläufen direkt benachbart sein. Durch eine solche Anordnung kann gewährleistet werden, dass das gesamte Filtermedium gleichmässig genutzt wird und sich keine Totzonen bilden, in denen sich keine oder nur eine schwache Strömung ausbildet.

Die Öffnungen von Filtratablauf und Unfiltratzulauf können gleich gross sein. Somit ist eine vollkommen regelmässige Packung bzw. Lochung der Filterschicht möglich. Ausserdem kann auf ein kompliziertes Werkzeug bei der Herstellung der Öffnungen verzichtet werden.

Die Durchmesser der Öffnungen der Unfiltratzuläufe können um einen Faktor 1 bis 2, bevorzugt 1.2 bis 1.8, besonders bevorzugt 1.4 bis 1.6 grösser sein als die Durchmesser der Öffnungen der Filtratabläufe. Dabei ist das konkrete Verhältnis abhängig von dem zu filtrierenden Medium sowie von dem zu erwartenden Filterkuchen.

Der Abstand zwischen Filtratablauf und Unfiltratzulauf kann dem ein- bis dreifachen Durchmesser der Filtratabläufe entsprechen. Dabei wird unter dem Abstand diejenige Distanz verstanden, welche zwei benachbarte Öffnungen voneinander trennt. Es handelt sich somit um den Abstand der beiden Zentren der Öffnungen abzüglich der beiden Öffnungsradien. Es hat sich gezeigt, dass ein solcher Abstand eine optimale Anordnung und optimale Ausnutzung der Filterschicht erlaubt. Je nach zu filtrierendem Medium kann der Abstand aber auch bewusst grösser oder kleiner gewählt werden, um dessen spezifischen Eigenschaften zu berücksichtigen.

Die Filterschicht kann Materialien wie beispielsweise Kieselgur, Perlit, Aktivkohle, Zellulose- und Kunststofffasern oder andere Materialien mit Filtrationseigenschaften umfassen.

Die Filterschicht kann eine Dicke zwischen 1 mm bis 10 mm, bevorzugt zwischen 2.5 mm und 8 mm, besonders bevorzugt zwischen 3.5 mm bis 5 mm aufweisen. Dabei wird unter der Dicke die trockene Einbaudicke der Filterschicht verstanden. Die Filterschichten werden üblicherweise beim Einbau in ein Filtermodul oder in einer Filtervorrichtung leicht komprimiert, so dass sich bei Betrieb keine Leckströmung zwischen den einzelnen Filterschichten einstellt. Da die Filterschichten im Betrieb üblicherweise leicht aufquellen, müssen die Filterschichten jedoch nur wenig komprimiert werden. Es hat sich gezeigt, dass eine Filterschicht mit einer solchen Dicke einfach herzustellen und auch die entsprechenden Öffnungen in der Filterschicht mit einfachen Mitteln in der geforderten Präzision, beispielsweise durch Stanzen, herstellbar sind.

Der Durchmesser der Öffnungen des Filtratablaufs kann zwischen 1 mm bis 10 mm, bevorzugt zwischen 2.5 mm und 8 mm, besonders bevorzugt zwischen 4 mm bis 6 mm aufweisen. Solche Öffnungen haben sich bei den verwendeten Baugrössen von Filtermodulen als sehr effizient erwiesen, das Filtrat kann ohne grossen Druckverlust ablaufen.

In einer erfindungsgemässe Verwendung einer oder mehrerer Filterschichten, wie vorgängig geschildert, werden im Filtermodul mittels Abschlussplatten die eine oder mehrere Filterschichten derart abgeschlossen, dass jeweils ein Öffnung des Filtratablaufs von jeweils sechs Öffnungen des Unfiltratzulaufs benachbart ist. Dabei versteht es sich von selbst, dass die Filterschichten derart ausgerichtet aufeinander gestapelt sind, dass die einzelnen Öffnungen der Filterschichten durch den gesamten Stapel durchgehend verlaufen.

Ein erfindungsgemässes Filtermodul für die laterale Filtration umfasst einen Stapel von aufeinander geschichteten Filterschichten wie vorgängig beschrieben, eine erste Abschlussplatte und eine zweite Abschlussplatte. Dabei sind die Filterschichten untereinander ausgerichtet, so dass sich die Öffnungen durch den Stapel erstrecken, wobei die erste und zweite Abschlussplatte je die Öffnungen des Filtratablaufs oder des Unfiltratzulaufs abschliessen. Mit einer solchen Anordnung lassen sich relativ einfach und kostengünstig laterale Filtermodule aufbauen.

Eine alternative Ausführungsform eines erfindungsgemässem Filtermoduls für die laterale Filtration umfasst einen Stapel von aufeinander geschichteten Filterschichten, eine erste Abschlussplatte und eine zweite Abschlussplatte. Jede Filterschicht weist auf ihrer Fläche mehrere voneinander beabstandete Öffnungen auf, wobei die Öffnungen die Filterschicht quer durchdringen und als Filtratablauf dienen. Die Filterschichten sind untereinander ausgerichtet, so dass sich die Öffnungen durch den Stapel erstrecken. Die erste Abschlussplatte schliesst die Öffnungen des Filtratablaufs ab und die zweite Abschlussplatte führt die Öffnungen des Filtratablaufs zusammen. Die Filterschichten weisen unterschiedliche Grössen auf, so dass sich auf der Aussenseite des Stapels eine gestufte Kontur ergibt. Dabei wird unter unterschiedlicher Grösse verstanden, dass die Filterschichten unterschiedliche flächige Ausdehnungen quer zur Stapelrichtung aufweisen. Durch die gestufte Kontur wird über eine längere Zeit eine Verstopfung verhindert, da zuerst der kürzeste Weg der Filterschicht durch die kleinere Filterschicht durchströmt wird und erst bei beginnender Verstopfung auch ein weiterer Weg durch die grössere Filterschicht zum Einsatz kommt. Eine solche Anordnung hat sich insbesondere für zu filtrierende Medien als vorteilhaft erwiesen, welche einen starken Filterkuchen mit Tendenz zur Verstopfung bilden.

Die Filterschichten können ringförmig ausgebildet sein. Beispielsweise können die Filterschichten durch dicke und dünne Ringe gebildet werden. Dabei wird unter dick oder dünn die Ausdehnung der Filterschicht quer zur Stapelrichtung verstanden. Eine ringförmige Ausgestaltung erlaubt, dass das Unfiltrat nicht nur mit der Aussenseite des Stapels in Kontakt kommt sondern auch von einer Ringinnenseite den Stapel kontaktiert. Dabei kann auch die Innenseite eine gestufte Kontur aufweisen. Unter ringförmig werden dabei auch Formen verstanden, welche keine kreisförmigen oder runden Aussendimensionen aufweisen. Ebenfalls wird in diesem Zusammenhang eine Form verstanden, welche mehrere Ringöffnungen aufweist.

Ein mittlerer Durchmesser der ringförmigen Filterschichten kann zwischen 40 mm und 100 m, bevorzugt zwischen 50 mm und 70 mm, besonders bevorzugt zwischen 59 mm und 61 mm betragen. Es hat sich gezeigt, dass solche Filtermodule geeignet sind für eher kleinere Anwendungen.

Das Material und die Dicke der Filterschicht, sowie der Abstand der Filtratabläufe entsprechen dabei vorzugsweise den Werten, wie sie vorangehende bereits diskutiert wurden.

Der Durchmesser der Öffnungen des Filtratablaufs kann zwischen 1 mm bis 10 mm, bevorzugt zwischen 2.5 mm und 8 mm, besonders bevorzugt zwischen 4 mm bis 6 mm aufweisen. Mit diesen Dimensionen kann die Filterschicht optimal ausgenutzt werden.

Der Stapel kann zwischen 10 und 200, bevorzugt zwischen 20 und 100, besonders bevorzugt zwischen 40 und 50 Filterschichten aufweisen. Mit dieser Anzahl Filterschichten werden die Stapel lediglich so gross, dass noch keine negativen Effekte, wie beispielsweise Druckabfall über die Länge der durchgehenden Unfiltratzuläufe oder Filtratabläufe auftreten.

Eine erfindungsgemässe Filtervorrichtung umfasst ein Filtermodul wie vorgängig geschildert.

Anhand von Figuren, welche lediglich Ausführungsbeispiele darstellen, wird die Erfindung im Folgenden näher erläutert. Es zeigen:
- Figur 1a:: eine erfindungsgemässe Filterschicht in einer ersten Ausführungsform,
- Figur 1b:: einen Querschnitt durch die Filterschicht gemäss Figur 1a,
- Figur 2a:: eine erfindungsgemässe Filterschicht in einer weiteren Ausführungsform,
- Figur 2b:: einen Querschnitt durch die Filterschicht gemäss Figur 2a,
- Figur 3:: eine schematische Darstellung einer erfindungsgemässen Filtervorrichtung,
- Figur 4a:: einen Längsschnitt durch eine erfindungsgemässe Filtervorrichtung mit ringförmigen Filterschichten, und
- Figur 4b:: einen Querschnitt durch die Filtervorrichtung gemäss Figur 4a.

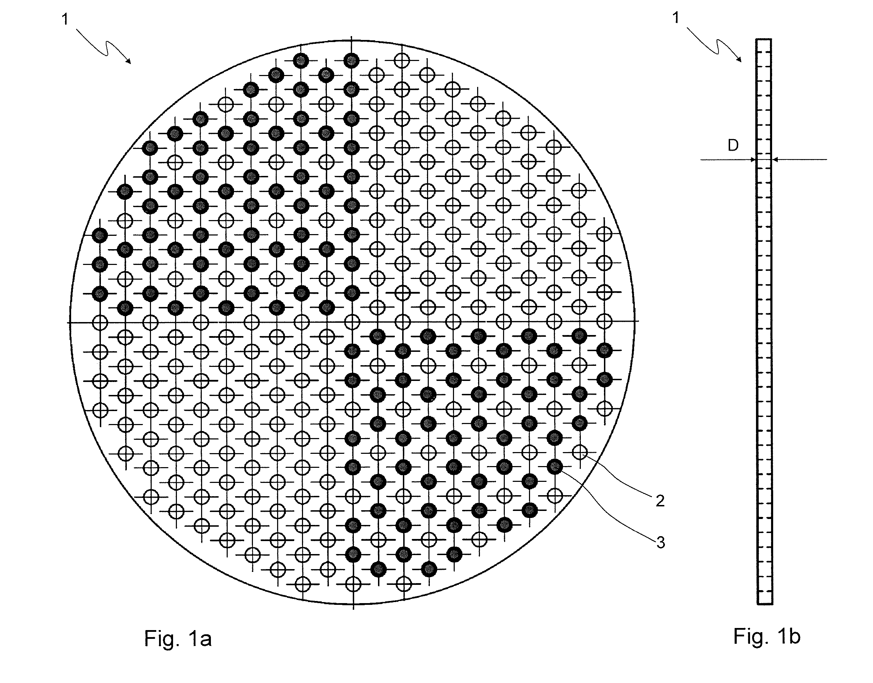

Die Figuren 1a und 1b zeigen eine erfindungsgemässe Filterschicht 1 einer ersten Ausführungsform je in einer Draufsicht und einem Querschnitt. Dabei besteht die Filterschicht 1 aus einer Mischung von Kieselgur und Zellulosefasern mit einer Dicke D von 4 mm und einer Vielzahl von durchgehenden gleich grossen Öffnungen. Jede der Öffnungen weist einen Durchmesser von 4 mm auf, der Abstand der Öffnungen untereinander beträgt ebenfalls 4 mm. Obwohl sich die einzelnen Öffnungen nicht voneinander unterscheiden, sind in der gezeigten Darstellung die Öffnungen teilweise unterschiedlich markiert, so dass Filtratabläufe 2 heller und Unfiltratzuläufe 3 dunkler dargestellt sind. Dabei sind zwei unterschiedliche Verteilungen in den Quadranten II und IV dargestellt. Je nach zu filtrierendem Medium kann durch eine geeignete Abschlussplatte das eine oder andere Muster oder gar ein nochmals anderes Muster ausgewählt werden. Entsprechend sind mehr oder weniger Öffnungen als Filtratablauf 2 ausgebildet.

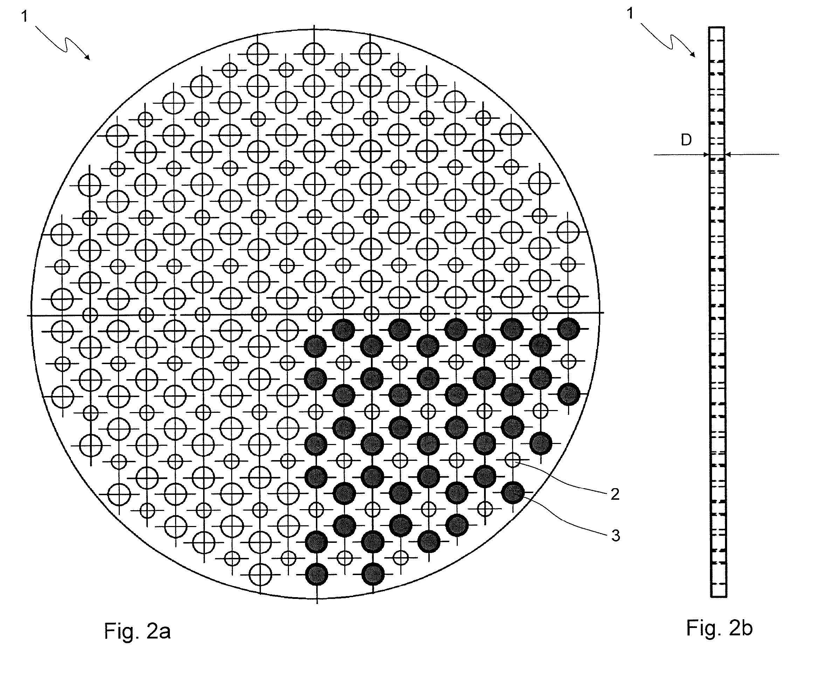

In den Figuren 2a und 2b ist eine weitere Ausführungsform einer Filterschicht 1 wiederum in einer Draufsicht und in einem Querschnitt dargestellt. Die Filterschicht 1 weist wiederum eine Vielzahl von Öffnungen auf. Dabei sind die Öffnungen für den Unfiltratzulauf 3 grösser als die Öffnungen für den Filtratablauf 2 ausgebildet. Im Quadranten IV sind die Öffnungen wiederum hell/dunkel gekennzeichnet. Eine solche Anordnung wird dann verwendet, wenn sich bei der Filtration ein Filterkuchen aufbaut, der im Laufe der Filtration den effektiven Durchmesser der Unfiltratzuläufe 3 kontinuierlich verkleinert. Der Durchmesser für die Filtratabläufe 2 beträgt 4 mm, der Durchmesser der Unfiltratzuläufe 3 misst 6 mm. Der Abstand zwischen einem Filtratablauf 2 und einem Unfiltratzulauf 3 beträgt 4 mm, der Abstand zwischen zwei benachbarten Unfiltratzuläufe 3 misst 3 mm. Die Dicke D der Filterschicht beträgt 4 mm. Selbstverständlich können die Dimensionen in Abhängigkeit des zu filtrierenden Mediums auch anders gewählt werden.

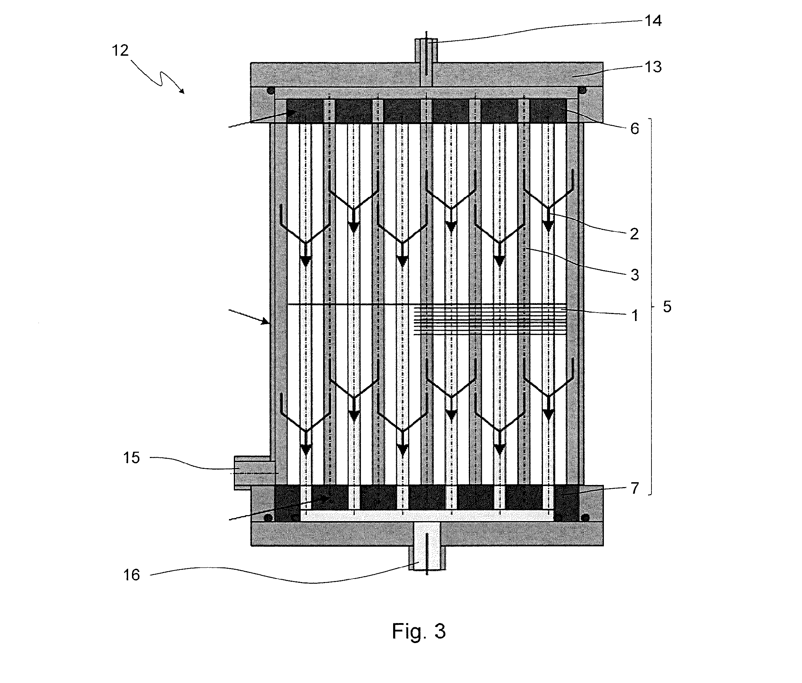

Figur 3 zeigt eine schematische Darstellung einer erfindungsgemässen Filtervorrichtung 12. Dabei sind die Strömungen des zu filtrierenden Mediums mit Hilfe von Pfeilen dargestellt. Die Filtervorrichtung 12 umfasst im Wesentlichen ein Filtermodul 5, welches in einem Gehäuse 13 eingebaut ist. Das Gehäuse 13 weist eine Entlüftungsöffnung 14, sowie einen Unfiltrateinlass 15 und einen Filtratauslass 16 auf. Das Filtermodul 5 umfasst eine Vielzahl von Filterschichten 1, welche ausgerichtet aufeinander gestapelt sind. Die einzelnen Öffnungen der Filterschichten 1 bilden somit durch den Stapel durchgehende Öffnungen, welche mit einer ersten und einer zweiten Abschlussplatte 6, 7 abwechselnd verschlossen werden. So schliesst die erste Abschlussplatte 6 alle Filtratabläufe 2 ab, während die Unfiltratzuläufe 3 mit dem Unfiltrateinlass 15 der Filtervorrichtung 12 verbunden sind. Die zweite Abschlussplatte 7 schliesst nun die Unfiltratzuläufe 3 ab und verbindet die Filtratabläufe 2 mit dem Filtratauslass 16 der Filtervorrichtung 12. Bei einer Filtration tritt nun das zu filtrierende Medium durch den Unfiltrateinlass 15 in das Gehäuse 13 ein und wird durch die erste Abschlussplatte 6 in die einzelnen Öffnungen der Unfiltratzuläufe 3 der Filterschichten 1 geleitet. Da diese Unfiltratzuläufe 3 jedoch auf der anderen Seite des Filtermoduls 5 durch die zweite Abschlussplatte 7 verschlossen sind, muss sich das zu filtrierende Medium einen Weg durch die Filterschichten 1 in die Öffnungen der Filtratabläufe 2 bahnen, wie durch die Pfeile dargestellt. Die zweite Abschlussplatte 7 führt das filtrierte Medium dann zum Filtratauslass 16 der Filtervorrichtung 12.

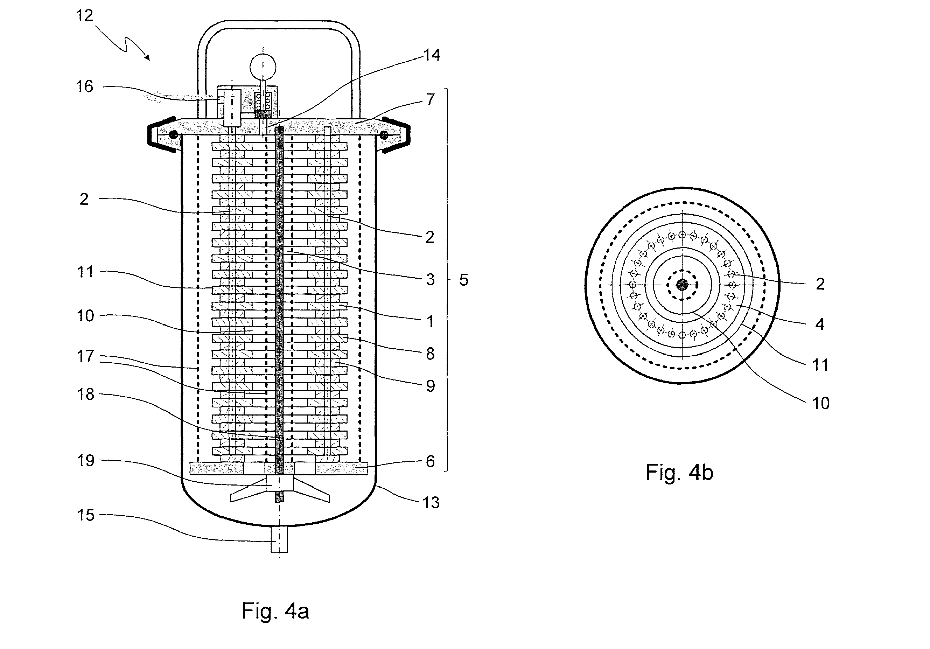

In den Figuren 4a und 4b ist in einem Längsschnitt und in einem Querschnitt eine weitere erfindungsgemässe Filtervorrichtung 12 mit ringförmigen Filterschichten 1 dargestellt. Die Filterschichten 1 sind ringförmig ausgestaltet und weisen auf ihrer Ringfläche 4 entlang des mittleren Durchmessers eine Mehrzahl von Öffnungen als Filtratauslässe 2 auf. Die ringförmigen Filterschichten 1 werden wiederum aufeinander ausgerichtet gestapelt, so dass die Öffnungen sich durch den gesamten Stapel hindurch erstrecken. Der Stapel von Filterschichten 1 wird durch eine Klemmschraube 18 und einer entsprechenden Klemmmutter 19 zwischen einer ersten Abschlussplatte 6 und einer zweiten Abschlussplatte 7 fixiert. Die zweite Abschlussplatte 7 führt die Filtratabläufe 2 zusammen und leitet diese an einen Filtratauslass 16 der Filtervorrichtung 12. Die erste Abschlussplatte 6 verschliesst die Öffnungen der Filtratabläufe 2. Im Gegensatz zur Ausführungsform gemäss Figur 3 erfolgt der Unfiltratzulauf 3 direkt auf die Innenseite 10 und die Aussenseite 11 der gestapelten ringförmigen Filterschichten 1. Eine solche Anordnung ist dann vorteilhaft, wenn sich bei der Filtration ein grosser Filterkuchen ausbildet, da keine kleinen Unfiltratzuläufe vorhanden sind. Um ein frühzeitiges Verstopfen der aktiven Filterschicht zu verhindern, werden nun die einzelnen ringförmigen Filterschichten 1 unterschiedlich gross ausgestaltet, so dass sich keine flache Innenseite 10 und/oder keine flache Aussenseite 11 der gestapelten Filterschichten bildet. So werden dicke Ringe 8 und dünne Ringe 9 abwechselnd aufeinander gestapelt.

Bei einer Filtration wird nun durch einen Unfiltrateinlass 15 das zu filtrierende Medium in das Gehäuse 13 der Filtervorrichtung 12 eingeführt. Dort kontaktiert das Medium die Aussenseite 11 und die Innenseite 10 des Filtermoduls 5 und strömt durch die ringförmigen Filterschichten 1 bis zu den Öffnungen des Filtratablaufs 2. Im Laufe der Zeit wird sich ein Filterkuchen aufbauen, welcher gewisse Wege versperrt. Durch die abwechselnde Anordnung von dicken Ringen 8 und dünnen Ringen 9 der Filterschichten 1 bildet sich eine gestufte Aussenseite 11 und/oder Innenseite 10 der aktiven Filterfläche und ein Verstopfen wird sich herauszögern, da sich das zu filtrierende Medium zuerst den kürzesten Weg durch die Filterschicht, also durch die dünnen Ringe 9 zu den Filtratabläufen 2 suchen wird und bei zunehmender Verstopfung einen längeren Weg durch die dicken Ringe 8 zu den Filtratabläufen 2 suchen wird. In der zweiten Abschlussplatte 7 wird das filtrierte Medium gesammelt und dem Filtratauslass 16 zugeführt. Um ein Entlüften des Gehäuses 13 zu ermöglichen ist eine Entlüftungsöffnung 14 vorgesehen. Gestrichelt ist eine Grenze 17 des maximalen Filterkuchens eingezeichnet.

## Patentansprüche

1. Filterschicht (1) für die laterale Filtration, mit mehreren voneinander beabstandeten Öffnungen, wobei die Öffnungen die Filterschicht (1) quer durchdringen, wobei die Öffnungen als Filtratablauf (2) und als Unfiltratzulauf (3) dienen, **dadurch gekennzeichnet, dass** die Öffnungen derart angeordnet sind, dass jeder Filtratablauf (2) von jeweils sechs Unfiltratzuläufen (3) benachbart ist.

2. Filterschicht (1) nach Anspruch 1, **dadurch gekennzeichnet, dass** jeder Unfiltratzulauf (3) von jeweils drei Filtratabläufen (2) benachbart ist.

3. Filterschicht (1) nach Anspruch 1 oder 2, **dadurch gekennzeichnet, dass** die Öffnungen von Filtratablauf (2) und Unfiltratzulauf (3) gleich gross sind.

4. Filterschicht (1) nach Anspruch 1 oder 2, **dadurch gekennzeichnet, dass** die Öffnungen der Unfiltratzuläufe (3) um einen Faktor 1 bis 2, bevorzugt 1.2 bis 1.8, besonders bevorzugt 1.4 bis 1.6 grösser sind als die Öffnungen der Filtratabläufe (2) sind.

5. Filterschicht (1) nach einem der Ansprüche 1 bis 4, **dadurch gekennzeichnet, dass** der Abstand zwischen Filtratablauf (2) und Unfiltratzulauf (3) dem ein- bis dreifachen Durchmesser der Filtratabläufe (2) entspricht.

6. Filterschicht (1) nach einem der Ansprüche 1 bis 5, **dadurch gekennzeichnet, dass** die Filterschicht (1) Materialien ausgewählt aus der Gruppe von Kieselgur, Perlit, Aktivkohle, Zellulose- und Kunststofffasern umfasst.

7. Filterschicht (1) nach einem der Ansprüche 1 bis 6, **dadurch gekennzeichnet, dass** die Filterschicht eine Dicke (D) zwischen 1 mm bis 10 mm, bevorzugt zwischen 2.5 mm und 8 mm, besonders bevorzugt zwischen 3.5 mm bis 5 mm aufweist.

8. Filterschicht (1) nach einem der Ansprüche 1 bis 7, **dadurch gekennzeichnet, dass** der Durchmesser der Öffnungen des Filtratablaufs (2) zwischen 1 mm bis 10 mm, bevorzugt zwischen 2.5 mm und 8 mm, besonders bevorzugt zwischen 4 mm bis 6 mm aufweist.

9. Verwendung einer oder mehrerer Filterschichten (1) nach einem der Ansprüche 1 bis 8 in einem Filtermodul (5), wobei im Filtermodul (5) mittels Abschlussplatten (6, 7) die eine oder mehrere Filterschicht (1) derart abgeschlossen werden, dass jeweils ein Öffnung des Filtratablaufs (2) von jeweils sechs Öffnungen des Unfiltratzulaufs (3) benachbart ist.

10. Filtermodul (5) umfassend einen Stapel von aufeinander geschichteten Filterschichten (1) nach einem der Ansprüche 1 bis 8, eine erste Abschlussplatte (6) und eine zweite Abschlussplatte (7), **dadurch gekennzeichnet, dass** die Filterschichten (1) untereinander ausgerichtet sind so dass sich die Öffnungen durch den Stapel erstrecken, wobei die erste und zweite Abschlussplatte (6, 7) je die Öffnungen des Filtratablaufs (2) oder des Unfiltratzulaufs (3) abschliessen.

11. Filtermodul (5) umfassend einen Stapel von aufeinander geschichteten Filterschichten (1), eine erste Abschlussplatte (6) und eine zweite Abschlussplatte (7), wobei jede Filterschicht (1) auf ihrer Fläche (4) mehrere voneinander beabstandete Öffnungen aufweist, wobei die Öffnungen die Filterschicht (1) quer durchdringen und als Filtratablauf (2) dienen, wobei die Filterschichten (1) untereinander ausgerichtet sind so dass sich die Öffnungen durch den Stapel erstrecken und die erste Abschlussplatte (6) die Öffnungen des Filtratablaufs (2) abschliesst und die zweite Abschlussplatte (7) die Öffnungen des Filtratablaufs (2) zusammenführt, **dadurch gekennzeichnet, dass** die Filterschichten (1) unterschiedliche Grössen aufweisen so dass sich auf der Aussenseite (11) des Stapels eine gestufte Kontur ergibt.

12. Filtermodul (5) nach Anspruch 11, **dadurch gekennzeichnet, dass** die Filterschichten (1) ringförmig ausgebildet sind.

13. Filtermodul (5) nach Anspruch 12, **dadurch gekennzeichnet, dass** ein mittlerer Durchmesser der ringförmigen Filterschichten (1) zwischen 40 mm und 100 m, bevorzugt zwischen 50 mm und 70 mm, besonders bevorzugt zwischen 59 mm und 61 mm beträgt.

14. Filtermodul (5) nach einem der Ansprüche 11 bis 13, **dadurch gekennzeichnet, dass** der Durchmesser der Öffnungen des Filtratablaufs (2) zwischen 1 mm bis 10 mm, bevorzugt zwischen 2.5 mm und 8 mm, besonders bevorzugt zwischen 4 mm bis 6 mm aufweist.

15. Filtermodul (5) nach einem der Ansprüche 10 bis 14, **dadurch gekennzeichnet, dass** der Stapel zwischen 10 und 200, bevorzugt zwischen 20 und 100, besonders bevorzugt zwischen 40 und 50 Filterschichten (1) aufweist.

16. Filtervorrichtung (12) umfassend ein Filtermodul (5) gemäss einem der Ansprüche 10 bis 15.
